# EUROPEAN PATENT APPLICATION

(11) **EP 1 337 077 A2**
(43) Date of publication of application: **20.08.2003**
(21) Application number: 03002755.1
(22) Date of filing: 06.02.2003
(51) Int. Cl.: H04L 12/56

(54) **Information distribution method and corresponding system**

(30) Priority: 18.02.2002 JP 2002040120
(71) Applicant: Sharp Kabushiki Kaisha, Osaka-shi Osaka (JP)
(72) Inventor: Suetsugu, Junji, Yamatokoriyama-shi, Nara (JP)
(74) Representative: Müller - Hoffmann & Partner

(57) **Abstract**

When an information distribution server (2) starts to distribute information to an information terminal (1) and receives a request (RQ) from the information terminal (1) to switch the destination of the information, the information distribution server (2) switches the destination from the information terminal (1) to destination equipment (3) and distributes the information to the destination equipment (3). When distribution is started and the information terminal (1) determines that it has a self state (e.g., an information processing capability, a size of memory available for storing information, and the like) corresponding to a state disallowing information to be received, the information terminal (1) transmits the request (RQ) to the information distribution server (2). Thus by transmitting the request (RQ) the information terminal (1) can readily switch the destination of the information from the information terminal (1) to the destination equipment (3). The information distribution server (2) can be released from making a decision as to whether a destination should be switched. Information can be distributed rapidly.

## Description

### BACKGROUND OF THE INVENTION

### Field of the Invention

The present invention relates generally to information distribution apparatuses, information terminal devices, information distribution systems, information distribution methods, programs, recording media having the program recorded therein, and information processing methods that distribute information, and particularly to those capable of switching a destination of information.

### Description of the Background Art

In recent years, information distribution services using IEEE802.11b, Bluetooth and other similar established wireless communication techniques have been noted. This wireless communication function is added to notebook personal computers, personal digital assistants (PDAs), mobile telephones and other similar various equipment. Such equipment with the function added thereto can receive information distributed from servers installed in train stations, convenience stores and the like and having a similar communication function, information distributed from a server on a network for example via a base station, and other similar information.

A technique employed to effectively utilize information taken into equipment is disclosed in Japanese Patent Laying-Open No. 2001-188736. This technique allows the information taken into the equipment to be output to and printed by a printer, or transferred as information for electronic mail, facsimiles and the like. If the equipment has storage capacity with available memory having a size insufficient for storing distributed information, however, the equipment cannot store the distributed information and the user can fail to receive the information.

Furthermore, if the equipment does not have a function capable of handling distributed information, the equipment needs to transfer information once taken thereinto to another equipment having a function capable of handling the information, which is inconvenient.

Japanese Patent Laying-Open No. 8-289348 discloses a service depending on a pager's data storage capacity to transmit a message or other similar communication data from a paging base station to the pager or from a paging exchange to a registered personal computer. However, the destination of the data is selected, as determined by a processing performed by the paging base station. As such, there has been a constraint that the paging base station is required to know the pager's storage capacity and in addition only terminals corresponding to this decision function of the paging base station allow the service to be enjoyed.

Furthermore to allow information distribution service to be received through various terminals different in function the paging base station needs to be provided with a system handling the various terminals individually. As a result, the system would be increased in scale. This has been too large a burden on the paging station as terminals having new functions are released one after another.

### SUMMARY OF THE INVENTION

The present invention contemplates an information distribution apparatus, information terminal device, information distribution system, information distribution method, program, recording medium having the program recorded therein, and information processing method capable of readily switching a destination of information, as required.

The present invention in one aspect provides an information distribution apparatus including: a distribution portion for distributing information; a destination switching portion switching a destination of the information distributed from the distribution portion from a specific one of a plurality of terminal devices to another terminal device when the distribution portion having started to distribute the information to the specific terminal device receives a request from the specific terminal device to switch the destination of the information; and a portion for continuing to distribute the information from the distribution portion to the specific terminal device when the distribution portion having started to distribute the information does not receive the request from the specific terminal device.

The information distribution apparatus transmits information to a specific terminal device initially. The specific terminal device transmits a request to the information distribution apparatus to switch the destination of the information to another terminal device, as required, to allow the information distribution apparatus to distribute information to another terminal device. The request can be issued to the information distribution apparatus to readily designate either the specific terminal device or another terminal device as the destination of the information, as required. The information distribution service can effectively be utilized.

The request is transmitted from the specific terminal device to the information distribution apparatus when the specific terminal device determines that it has a self state corresponding to a predetermined state requiring that the destination of the information be switched to another terminal device. As such, when the specific terminal device has the predetermined state, another terminal device can serve as an alternative to the specific terminal device to obtain distributed information.

Another terminal device described above is capable of providing a processing including receiving and storing the information. This ensures that the distributed information can be received by and stored in another terminal device.

The decision on whether the destination of the information should be switched to another terminal device is made by the specific terminal device, rather than the information distribution apparatus. The information distribution apparatus can thus be released from the burden of making the decision. As such, if terminal devices having different self states are destinations of information, the information distribution apparatus can rapidly distribute the information to another terminal device that can receive the information.

In the above information distribution apparatus desirably the predetermined state disallows a processing including receiving and storing the information.

Accordingly, if the specific terminal device has a state disallowing distributed information to be received, the destination of the information is switched to another terminal device that can effect a processing including receiving and storing the information and the information is transmitted to another terminal device. If the specific terminal device when information is distributed has a state disallowing the distributed information to be received, another terminal device can be used to obtain the distributed information.

In the above information distribution apparatus desirably the specific terminal device determines from attribute data received from the information distribution apparatus and indicative of an attribute of the information whether the self state corresponds to the predetermined state.

The specific terminal device can determine the necessity of switching a destination as its self state corresponds to the predetermined state based on an attribute of information that the information distribution apparatus starts to distribute. The destination of the information can variably be designated in accordance with the attribute of the information distributed.

In the above information distribution apparatus desirably the attribute data is contained in the information. An attribute of information that the apparatus starts to distribute can be obtained from the exact information.

In the above information distribution apparatus desirably the attribute data is transmitted from the information distribution apparatus to the specific terminal device when the distribution portion starts to distribute the information before the information is transmitted. Distributing the information is preceded by distributing attribute data alone. The specific terminal device can be released from extracting an attribute from the information so that it can rapidly determine whether the destination of the information subsequently distributed should be switched.

In the above information distribution apparatus desirably the predetermined state indicates that the specific terminal device has an insufficient storage capacity to store distributed information. As such, if the specific terminal device has insufficient storage capacity and hence a state incapable of allowing distributed information to be obtained, another terminal device can be used to obtain the distributed information.

In the above information distribution apparatus desirably the predetermined state represents that the specific terminal device has an insufficient ability to process the information distributed. If the specific terminal device is insufficiently capable of processing information and has a state disallowing distributed information to be processed and obtained, another terminal device can be used to obtain the distributed information.

In the above information distribution apparatus desirably the predetermined state represents that the period of time required for the specific terminal device to completely receive the information transmitted from the information distribution apparatus exceeds a predetermined period of time set in the specific terminal device. As such, when the specific terminal device determines that receiving distributed information requires more than the predetermined period of time, another terminal device can be used to obtain the distributed information. This can prevent the specific terminal device from having a function bound for more than the predetermined period of time by a processing involved in distributing the information. The specific terminal device can receive the distributed information via another terminal device, while it can effect a different processing.

In the above information distribution apparatus desirably the predetermined state represents that a predetermined point of time at which the information should be distributed is set in the specific terminal device and the request contains time data indicating the predetermined point of time. Furthermore the information distribution apparatus further includes a time counting portion counting a current time and when the time counting portion counts the predetermined point of time indicated by the time data contained in the request the information is distributed to another terminal device.

The specific terminal device having a state with a predetermined point of time set transmits a request to switch a destination. Accordingly, when the predetermined point of time is arrived at, information is transmitted to another terminal device. If another terminal device is used to receive distributed information, the time at which another terminal device starts to receive the distributed information can be controlled to be the predetermined point of time via the specific terminal device and the information distribution apparatus.

In the above information distribution apparatus desirably the predetermined state represents that the request is unconditionally transmitted. As such, when the specific terminal device is to receive information distributed, the specific terminal device can unconditionally be switched to another terminal device so that the apparatus can distribute the information to another terminal device.

In the above information distribution apparatus desirably the information distribution apparatus further includes a notification portion transmitting to the specific terminal device a notification that the information has been transmitted to another terminal device. The specific terminal device receives the notification from the notification portion and in accordance with the notification received the specific terminal device externally notifies that the information has been distributed to another terminal device. The user of the specific terminal device can confirm from the notification that the information has been distributed to another terminal device.

In the above information distribution apparatus desirably the request to switch a destination includes identification information used to identify another terminal device on a network uniquely and the information distribution apparatus distributes information to another terminal device identified from the identification information included in the request that is received from the specific terminal device. In place of the specific terminal device another terminal device to receive information distributed can be designated using the identification information included in the request.

In the above information distribution apparatus desirably the specific terminal device is a mobile device. If its mobility limits the specific, mobile terminal device's ability involved in a processing including receiving or storing information then in place of the specific terminal device another terminal device can be used to receive the information.

The present invention in another aspect provides an information terminal device corresponding to any one of a plurality of information terminal devices communicating with an information distributing source apparatus to receive the information therefrom, the source apparatus operable in accordance with content received, the information terminal device including: a state decision portion determining whether the information terminal device has a self state corresponding to a predetermined state when the source apparatus starts to distribute the information, the predetermined state requiring that a destination of the information be switched to another information terminal device; a portion transmitting a request to the source apparatus to switch the destination of the information from the information terminal device to another information terminal device when the state decision portion determines that the self state corresponds to the predetermined state; and a portion receiving the information from the source apparatus when the state decision portion determines that the self state fails to correspond to the predetermined state.

When the information terminal device has a self state corresponding to a predetermined state, a request to switch a destination can be used to switch the information terminal device to another information terminal device to obtain distributed information via another information terminal device.

The decision on whether the destination of the information should be switched to another information terminal device is made by an information terminal device, rather than the source apparatus. The source apparatus can thus be released from the burden of making the decision. As such, if terminal devices having different self states are destinations of information distributed, the burden on the source apparatus that is associated with distribution of information can be alleviated.

The present invention in still another aspect provides an information distribution system, including an information distribution apparatus distributing information and a plurality of information terminal devices to receive the information distributed. When the information distribution apparatus starting to distribute the information to a specific one of the plurality of information terminal devices receives a request from the specific information terminal to switch a destination of the information, the specific terminal device is switched to another one of the plurality of information terminal devices and the information distribution apparatus distributes the information to another information terminal device. When the information distribution apparatus starts to distribute the information, the specific information terminal device transmits, as required, a request to the information distribution apparatus to switch the destination of the information for distribution.

If the specific information terminal device has a state requiring that the destination of information be switched to another information terminal device, the specific information terminal device can be switched to another information terminal device and distributed information can be obtained via another information terminal device. As a result a request to switch a destination can be used to readily designate either the specific information terminal device or another information terminal device as the destination of information.

The decision on whether the destination of the information should be switched to another information terminal device is made by the specific information terminal device, rather than the information distribution apparatus. The information distribution apparatus can thus be released from the burden of making the decision. As such, if information terminal devices having different self states are destinations of info distributed, the burden on the information distribution apparatus that is associated with distribution of information can be alleviated.

The present invention in still another aspect provides a method of distributing information to a plurality of terminal devices through a network, comprising the steps of: distributing information; switching a destination of the information distributed in the step of distributing from a specific one of the terminal devices to another one of the terminal devices when the step of distributing starts to distribute the information to the specific terminal device and a request is received from the specific terminal device to switch the destination of the information; and allowing the step of distributing to continue to distribute the information to the specific terminal device when the step of distributing starts to distribute the information and the request is not received from the specific terminal device.

If the specific terminal device has a state requiring that the destination of information be switched to another terminal device, the specific terminal device can be switched to another terminal device and distributed information can be obtained via another information terminal device. Accordingly, a request to switch a destination can be used to readily designate either the specific terminal device or another terminal device as the destination of information.

The decision on whether the destination of the information should be switched to another terminal device is made by the specific terminal device, rather than the information distribution apparatus. The information distribution apparatus can thus be released from the burden of making the decision. As such, if terminal devices having different self states are destinations of info distributed, the burden on the information distribution apparatus that is associated with distribution of information can be alleviated.

The present invention in still another aspect provides a program product causing a computer to perform the above information distribution method.

The present invention in still another aspect provides a recording medium having the above program machine-readably recorded therein.

The present invention in still another aspect provides a method of processing information, performed in any one of a plurality of information terminal devices receiving information distributed from a source apparatus operable in accordance with content received, comprising the steps of: determining whether the information terminal device has a self state corresponding to a predetermined state when the source apparatus starts to distribute the information, the predetermined state requiring that a destination of the information be switched to another information terminal device; transmitting a request to the source apparatus to switch the destination of the information from the information terminal device to another information terminal device for distribution when in the step of making a decision a decision is made that the self state corresponds to the predetermined state; and receiving the information from the source apparatus when in the step of making a decision a decision is made that the self state does not correspond to the predetermined state.

If any information terminal device has a state requiring that the destination of information be switched to another information terminal device then in place of the information terminal device another information terminal device can effect a processing including receiving and storing distributed information and obtain the information. Accordingly a request to switch a destination can be issued to the source apparatus to readily designate either any information terminal device or another information terminal device as the destination of the information, as required. The information distribution service can effectively be utilized.

The decision on whether the destination of the information should be switched to another information terminal device is made by any information terminal device, rather than the source apparatus. The source apparatus can thus be released from the burden of making the decision. As such, if information terminal devices having different self states are destinations of info distributed, the burden on the source apparatus that is associated with distribution of information can be alleviated.

In the present invention desirably a program product may be provided to cause a computer to perform the above information processing method. Furthermore, a machine-readable recording medium having this program recorded therein may be provided.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Figs. 1A, 1B, 1C, 1D and 1E schematically show configurations of an information distribution system of the present invention as applied to first, third, fifth, seventh and eighth embodiments, respectively;
Figs. 2A and 2B are block diagrams of configurations of information terminals of the first and eighth embodiments, respectively;
Figs. 3A and 3B are block diagrams of information distribution servers of the first and fifth embodiments, respectively;
Figs. 4A and 4B are block diagrams of configurations of destination equipment of the first and third embodiments, respectively;
Fig. 5 is a flow chart of a process of an information distribution service of the first embodiment;
Fig. 6 represents a functional configuration of an information terminal, an information distribution server and destination equipment in an information distribution system of a second embodiment;
Fig. 7 is a flow chart of a process of an information distribution service of the second embodiment;
Fig. 8 shows a functional configuration of an information distribution system of the third embodiment;
Fig. 9 is a flow chart of a process of an information distribution service of the third embodiment;
Fig. 10 is a flow chart of a process of an information distribution service of a fourth embodiment;
Fig. 11 shows a functional configuration of an information distribution system of the fifth embodiment;
Fig. 12 is a flow chart of a process of an information distribution service of the fifth embodiment;
Fig. 13 is a flow chart of a process of an information distribution service of a sixth embodiment;
Fig. 14 shows a functional configuration of an information distribution system of the seventh embodiment;
Fig. 15 is a flow chart of a process of an information distribution service of the seventh embodiment;
Fig. 16 shows a functional configuration of an information distribution system of the eighth embodiment; and
Fig. 17 is a flow chart of a process of an information distribution service of the eighth embodiment.

### DESCRIPTION OF THE PREFERRED EMBODIMENTS

Hereinafter the present invention in each embodiment will more specifically be described with reference to the drawings. In each embodiment is obtained the following feature: a server corresponding to a source of information distributes information to an information terminal initially, and the information terminal transmits a request to the server, as required, to switch the destination of the information to distribute the information via the server to equipment corresponding to a different destination indicated by the request. If the information terminal has an insufficient storage capacity or an insufficient ability to handle information, the information distribution service can still be utilized effectively. Furthermore, destinations are switched, as determined by the information terminal. As such the server can be free from the burden imposed when various information terminals different in function are destinations.

### First Embodiment

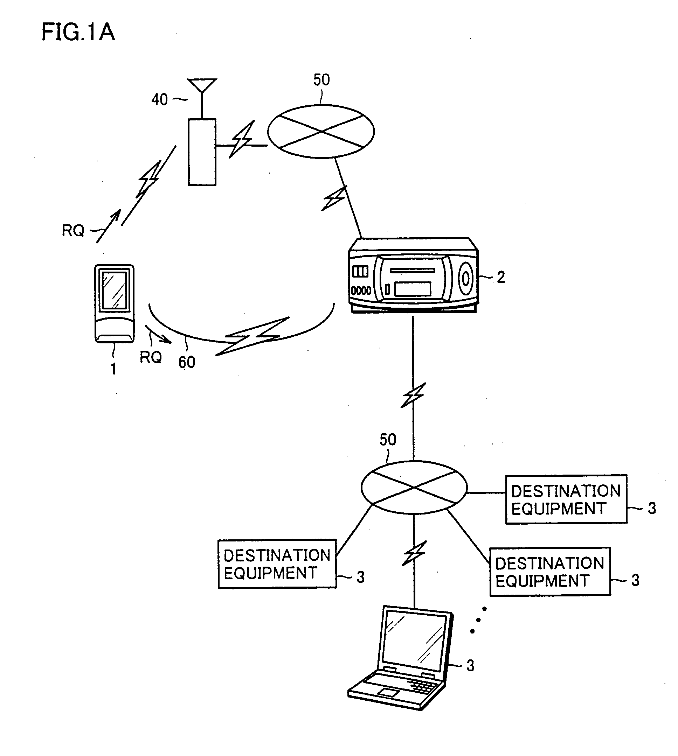

Fig. 1A schematically shows a configuration of an information distribution system applied in the present embodiment. In Fig. 1A the information distribution system includes an information terminal 1, an information distribution server 2 effecting an information distribution service, and a plurality of destination equipment 3 corresponding to equipment designated as destinations in response to a request RQ issued to switch a destination. Information terminal 1 and the plurality of destination equipment 3 are to receive information distributed. Destination equipment 3 is capable of effecting a process including receiving and storing information distributed thereto. Request RQ is a signal containing information such as an address for designating destination equipment 3 on a network and it requests switching a destination to the equipment designated by the address and distributing information to the designated equipment. While herein single destination equipment 3 is designated in response to request RQ as a destination and receives information distributed, more than one destination equipment 3 may be designated by the request as destinations and receive information distributed. The user of information terminal 1 can obtain the received information in destination equipment 3.

Furthermore, destination equipment 3 may be uniquely, previously designated, rather than as depending on content of request RQ.

Information terminal 1 communicates with information distribution server 2 to receive information distributed from information distribution server 2 and transmit request RQ. Information terminal 1 described herein is a mobile terminal, such as a mobile phone or a PDA, and communicates with information distribution server 2 for example via a base station 40 and a telephone line network 50 or via wireless communication 60 in accordance with Bluetooth or the like.

Information distribution server 2 has functions including those for storing information to be distributed and for communicating with information terminal 1, destination equipment 3 and the like directly or indirectly to transmit information to be distributed to information terminal 1, receive request RQ, transmit information to be distributed to destination equipment 3 in accordance with request RQ, and perform other operations.

The communication function of information distribution server 2 may be a function for directly communicating with information terminal 1 for example by means of Bluetooth communication technique or it may be a function for indirect communication on a network including base station 40 and telephone line network 50. Any type of connection line (such as 802.11 b, power line and the like) may be used. Furthermore, more than one type of connection line may be used. Furthermore, more than one communication path may exist. All of this also applies to between information distribution server 2 and destination equipment 3.

When information distribution server 2 transmits information to be transmitted, it divides the information into frames of a prescribed size and transmits them sequentially. Assume that a frame first transmitted when distribution starts includes data indicating an attribute related to the information to be distributed (e.g., the amount of the information, the format type of the information, the file size, the communication rate and the like). Furthermore, a so-called push-type communication technique is adopted for the sake of illustration. More specifically, in distributing information, information distribution server 2 applies a trigger to destination equipment, information terminal 1 for example, and the information is distributed. Hereinafter this trigger will be referred to as a service starting trigger. Applying the service starting trigger corresponds to a starting point at which information distribution server 2 distributes information to information terminal 1.

Destination equipment 3 and information distribution server 2 communicate through a variety of types of communication line. Herein, they communicate for example through telephone line 50. Destination equipment 3 has such a communication function and a processing function including storing information distributed from information distribution server 2 and received. Destination equipment 3 is for example a personal computer stationary in the house of a user on the road carrying information terminal 1 with him/her.

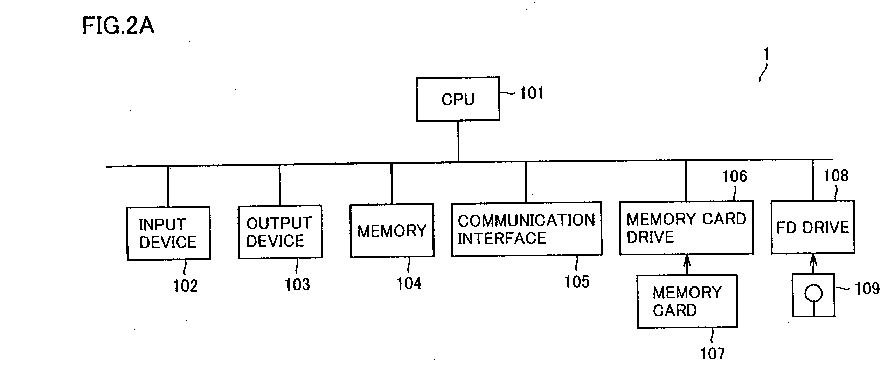

Figs. 2A, 3A and 4A show configurations of information terminal 1, information distribution server 2 and destination equipment 3 shown in Fig. 1A. In Fig. 2A, information terminal 1 includes a central processing unit (CPU) 101, an input device 102 externally operated to input information, an output device 103 for example displaying and printing information and/or outputting the information audibly, a memory 104 including read only memory (ROM) or random access memory (RAM), a communication interface 105 such as a modem, a memory card drive 106 accessing an integrated circuit (IC) card or any other similar memory card 107 detachably attached thereto, and a flexible disc (FD) drive 108. FD drive 108 accesses an FD109 detachably attached thereto. Communication interface 105 is connectable to various types of communication line including the Internet.

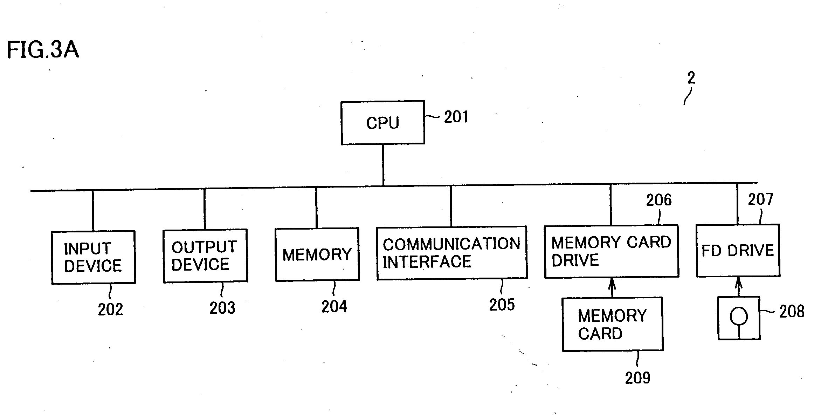

In Fig. 3A, information distribution server 2 includes a CPU 201, an input device 202 externally operated to input information, an output device 203 for example displaying and printing information and/or outputting the information audibly, a memory 204 including ROM or RAM, a communication interface 205 such as a modem, a memory card drive 206 accessing an IC card or any other similar memory card 209 detachably attached thereto, and an FD drive 207. FD drive 207 accesses an FD208 detachably attached thereto. Communication interface 205 is connectable to various types of communication line including the Internet.

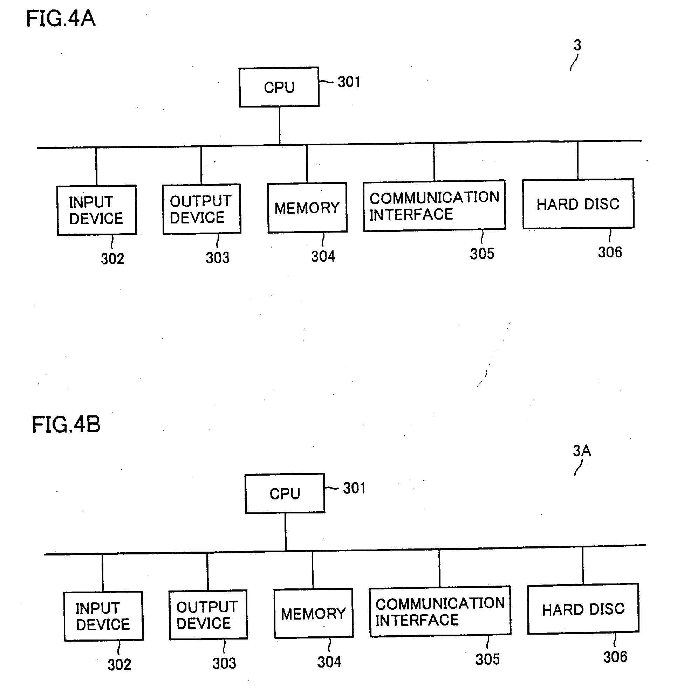

In Fig. 4A, destination equipment 3 includes a CPU 301, an input device 302 externally operated to input information, an output device 303 for example displaying and printing information and/or outputting the information audibly, a memory 304 including ROM or RAM, a communication interface 305 such as a modem, and a hard disc 306. Communication interface 305 is connectable to various types of communication line including the Internet.

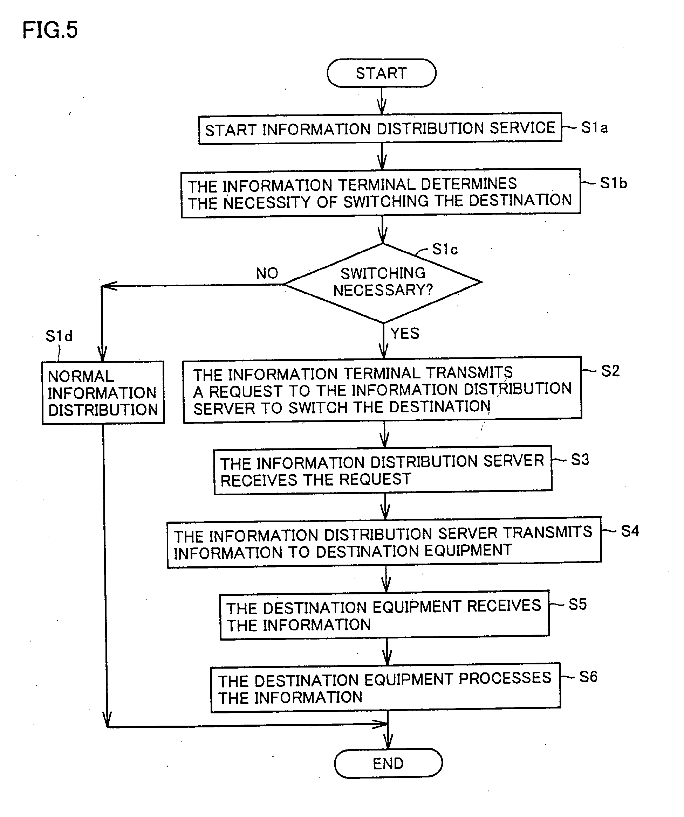

In the present embodiment the information distribution system allows an information distribution servicing operation, as will be described hereinafter with reference to the flow chart shown in Fig. 5. Information distribution server 2 applies a service starting trigger to information terminal 1 to start distributing information (step (S) 1a). From information received when the distribution starts, e.g. from content of an initially received frame, information terminal 1 determines whether it is necessary to switch the destination (S1b). If information terminal 1 determines that it is not and that the terminal can receive the information (No at S1c), a normal information distribution service is provided. In other words, the distribution of the information to information terminal 1 continues (S1d). More specifically, when information distribution server 2 having started the information distribution service does not receive request RQ from information terminal 1 to switch the destination, information distribution server 2 transmits to information terminal 1 information to be distributed. Information terminal 1 (1A) receives the information, and outputs the information through output device 103 or stores it to memory 104.

If information terminal 1 determines that it is necessary to switch the destination (Yes at S1c) information terminal 1 transmits request RQ to information distribution server 2 (S2). Information distribution server 2 receives request RQ (S3) and transmits information to destination equipment 3 designated in place of information terminal 1 in accordance with request RQ (S4).

Destination equipment 3 receives the information transmitted from information distribution server 2 (S5) and processes the received information (S6). More specifically, if destination equipment 3 is a personal computer, it writes the received information for example to hard disc 306. If destination equipment 3 is a printer then it prints the received information out via output device 303.

### Second Embodiment

In a second embodiment information terminal 1 has insufficient memory to store distributed information and accordingly the destination of the information is switched from information terminal 1 to designation equipment 3. In the present embodiment, information terminal 1 is assumed for example as a PDA, a mobile phone or the like having a constraint on its storage capacity, information distribution server 2 for example as a server computer installed in train stations, convenience stores or the like, and destination equipment 3 for example as a personal computer having a large storage capacity for example in hard disc 306.

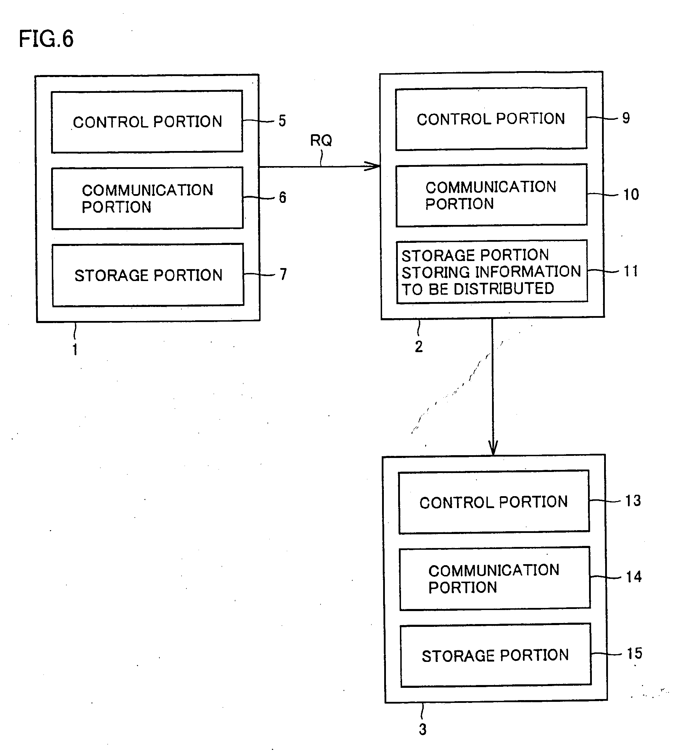

Fig. 6 shows a functional configuration of information terminal 1, information distribution server 2 and destination equipment 3 in the second embodiment. As shown in the figure, information terminal 1 includes a control portion 5 for effecting an information distribution service, a communication portion 6 for communicating with information distribution server 2 through communication interface 105, and a storage portion 7 for storing distributed information for example to memory 104. Each portion's function is implemented by CPU 101 executing a program.

Information distribution server 2 includes a control portion 9 for effecting the information distribution service, a communication portion 10 for communicating with information terminal 1, destination equipment 3 and the like through communication interface 205, and a storage portion 11 previously storing for example to memory 204 information to be distributed, and reading the information from the memory. Each portion's function is implemented by CPU201 executing a program.

Destination equipment 3 includes a control portion 13 for effecting the information distribution service, a communication portion 14 for communicating with information distribution server 2 through communication interface 305, and a storage portion 15 storing distributed information for example to hard disc 306 and reading the information from the disc. Each portion's function is implemented by CPU301 executing a program.

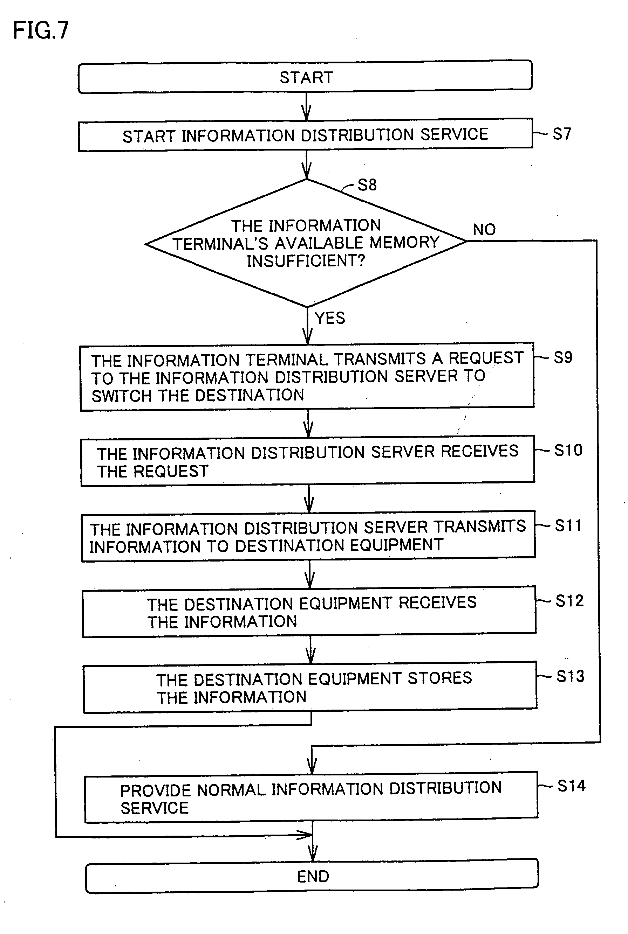

With reference to the flow chart of Fig. 7, the information distribution system of the second embodiments operates, as described hereinafter. In information distribution server 2 control portion 9 starts the information distribution service (S7). In information terminal 1 control portion 5 in response to a service starting trigger being applied determines via storage portion 7 whether there is insufficient memory to store information distributed from information distribution server 2 (i.e., memory cannot be ensured for the information) (S8). This decision may be made from information of the size of the information to be distributed that is stored in a frame initially received when the information distribution service is started, although it is not limited thereto. For example, control portion 5 may determine that memory is insufficient when available memory accessed by storage portion 7 of information terminal 1 has no more than a predetermined size.

If control portion 5 determines that memory is insufficient (Yes at S8) control portion 5 transmits request RQ through communication portion 6 to information distribution server 2 to switch the destination (S9). In information distribution server 2 control portion 9 receives request RQ through communication portion 10 (S10), and reads through storage portion 11 information to be distributed and distributes the read information through communication portion 10 to destination equipment 3, rather than to information terminal 1, in accordance with request RQ (S11). In destination equipment 3 control portion 13 receives through communication portion 14 the information distributed from information distribution server 2 (S12) and stores the received information to a memory location via storage portion 15 (S13).

In contrast, if in information terminal 1 a decision is made that there is sufficient memory for storing distributed information (No at S8) then the normal information distribution service is provided (S14).

### Third Embodiment

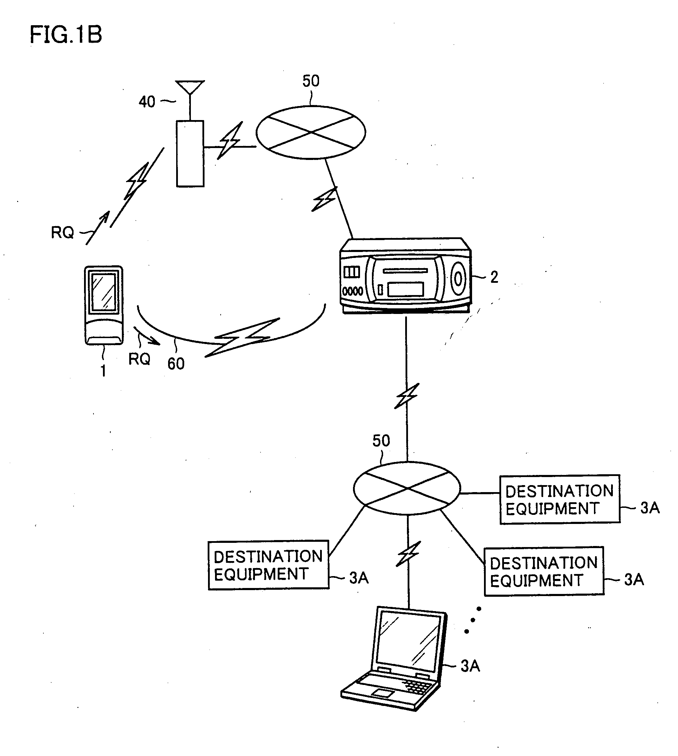

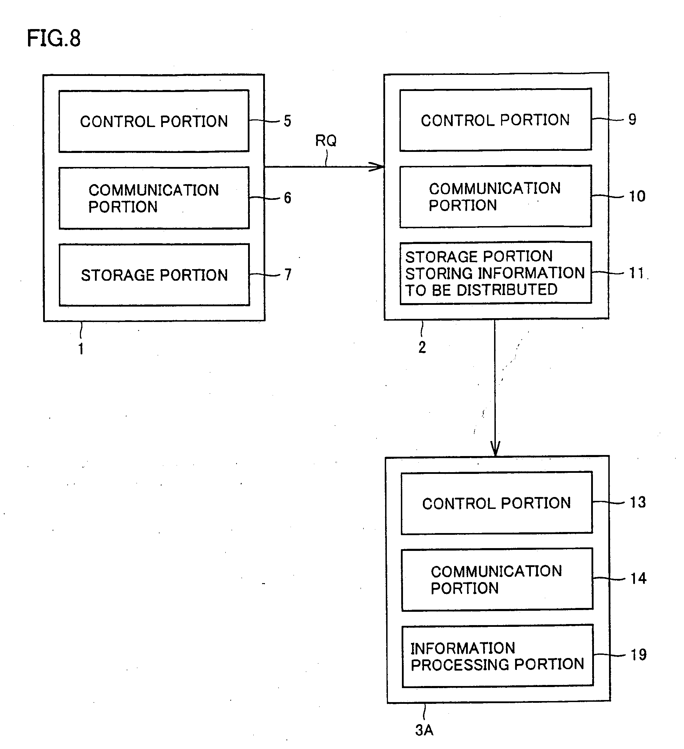

A third embodiment will be described. Figs. 1B and 8 show a general and functional configurations, respectively, of the present information distribution system in the third embodiment. As shown in Fig. 8, the information distribution system includes information terminal 1, information distribution server 2 and destination equipment 3A. Information terminal 1 and information distribution server 2 are similar in functional configuration to those shown in Fig. 6. Accordingly they will not be described. Destination equipment 3A has a functional configuration shown in Fig. 4B. The Fig. 4B configuration is similar to the Fig. 4A configuration and accordingly will not be described.

In the third embodiment, information terminal 1 is assumed for example as a PDA, a mobile phone or the like having a constraint on its information processing function, information distribution server 2 for example as a server computer installed for example in train stations, convenience stores and the like, and destination equipment 3A for example as a personal computer having a sufficient information processing ability, equipment specialized to process specific information (e.g., a printer having a processing capability to print image information, a head set having an ability to process audio information, or the like).

As shown in Fig. 8, destination equipment 3A includes control portion 13, communication portion 14, and an information processing portion 19 for processing distributed information. Information processing portion 19 has an information processing function implemented by CPU 301 of Fig. 4B executing a program or data previously stored in memory 304 of Fig. 4B.

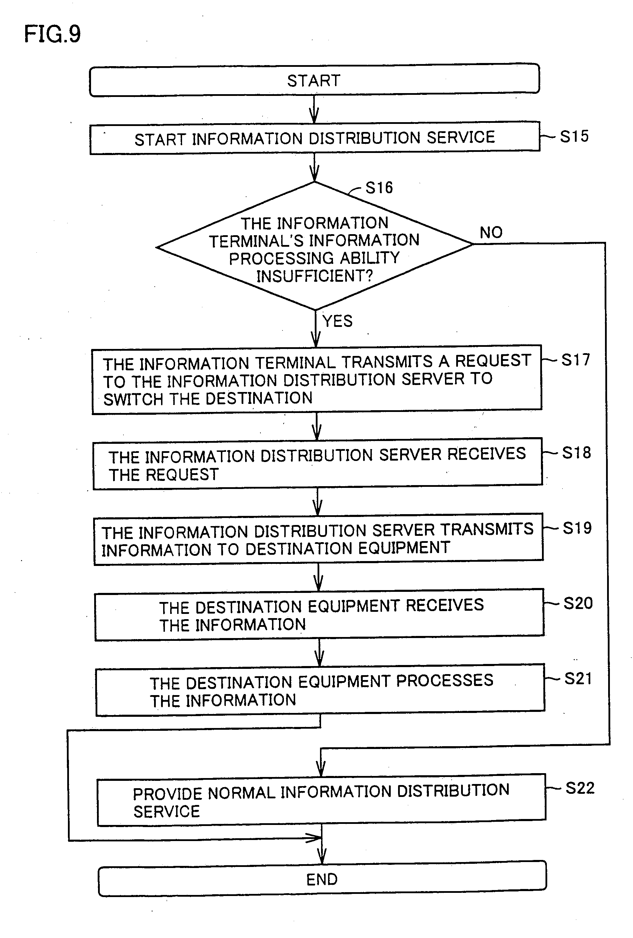

With reference to Fig. 9, the information distribution service in the third embodiment operates, as described hereinafter. Information distribution server 2 starts the information distribution service (S15). In information terminal 1 control portion 5 in response to a service starting trigger being applied determines whether it has an insufficient ability to process information distributed from information distribution server 2 (S16). If so (Yes at S16) information terminal 1 transmits request RQ to information distribution server 2 to switch the destination (S17). In information distribution server 2 control portion 9 receives request RQ through communication portion 10 (S18). Control portion 9 reads through storage portion 11 information to be distributed, and in accordance with request RQ distributes the read information to destination equipment 3A in place of information terminal 1 (S19).

The decision that information terminal 1 has an insufficient ability to process distributed information is made for example when: information distributed by a filename extension indicated by an attribute of an initial frame of distributed information is indicated to be image data of a format type, whereas output device 103 of information terminal 1 has a screen displaying ability which fails to correspond to the format type; there is indicated that information distributed by the extension is indicated to be audio information, whereas output device 103 of information terminal 1 does not have a function to provide an audio output; and the like.

Destination equipment 3A receives through communication portion 14 the information distributed from information distribution server 2 (S20) and the received information is processed by information processing portion 19 (S21). For example if the received information is audio information, information processing portion 19 processes the audio information for reproducing the information to output it to a headset.

If a decision is made that information terminal 1 has a sufficient ability to process information to be distributed (No at S16) then the normal information distribution service is provided (S22).

### Fourth Embodiment

A fourth embodiment provides an information distribution system, as described hereinafter. The information distribution system of the present embodiment has general and functional configurations similar to those shown in Figs. 1A and 6, respectively. Accordingly they will not be described. In the present embodiment, information terminal 1 is assumed for example as a notebook personal computer, or a PDA, a mobile phone or any other similar mobile information terminal equipment, information distribution server 2 for example as a server computer installed for example in train stations, convenience stores and the like, and destination equipment 3 for example as a personal computer stationary at home and having a sufficient ability to process information.

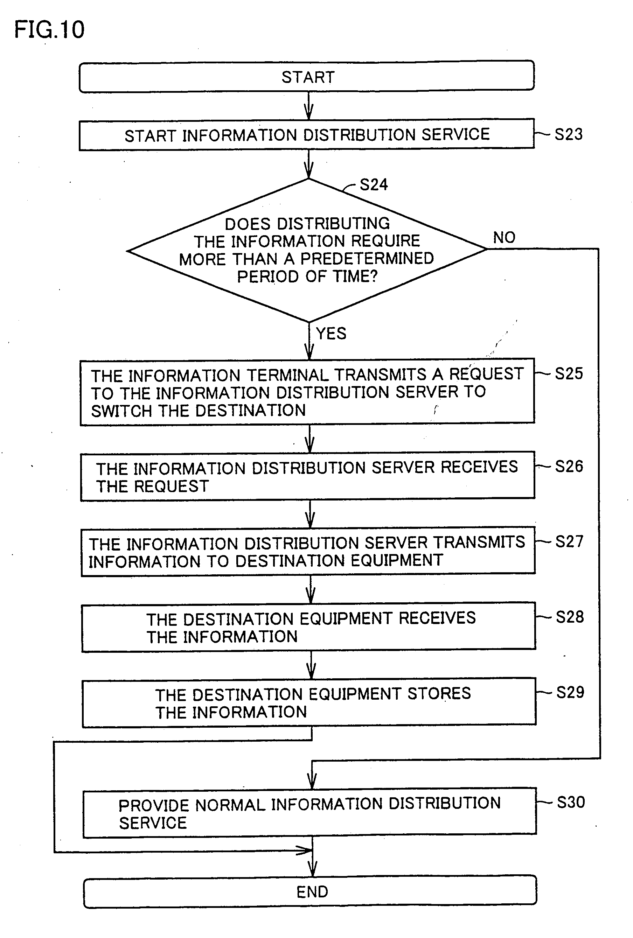

With reference to the flow chart shown in Fig. 10, the information distribution service in the fourth embodiment operates, as described hereinafter.

Information distribution server 2 starts the information distribution service (S23). In information terminal 1 control portion 5 estimates from the distributed information's file size, communication rate and other attributes indicated by an initial frame of the distributed information the time required to complete the distribution of the information, and determines whether the estimated required time exceeds a predetermined time (S24). If so (Yes at S24), it transmits request RQ to information distribution server 2 through communication portion 6 to switch the destination (S25).

In information distribution server 2 control portion 9 receives request RQ through communication portion 10 (S26) and in accordance with request RQ distributes the information to destination equipment 3 (S27). In destination equipment 3 control portion 13 receives through communication portion 14 the information distributed from information distribution server 2 (S28) and stores the received information via storage portion 15 to a location (S29).

If the estimated required time does not exceed the predetermined time and accordingly a decision is made that the distribution of the information will complete in a short period of time (No at S24) the normal information distribution service is provided (S30).

Note that the decision that the estimated required time exceeds the predetermined time and the distribution of the information requires a long period of time is made for example when the information distribution service is received at a convenience store, downloading information to information terminal 1 requires more than a predetermined period of time (for example of 10 minutes). The predetermined time may be fixed or set by a user in information terminal 1 previously, as desired, or it may be automatically adjusted to correspond to the current situation (for example shopping in a convenience store, working in office, and the like).

### Fifth Embodiment

A fifth embodiment will be described.

In the above embodiments when information terminal 1 makes a decision that it has a state corresponding to a predetermined state requiring that the destination of information be switched to destination equipment 3 information terminal 1 transmits request RQ to switch the destination, and this decision is made from data indicating an attribute included in information distributed from information distribution server 2. This decision, however, may be made, as described in a fifth embodiment. More specifically, the decision may be made not from an attribute of distributed information bad in accordance with a mode previously introduced in information terminal 1.

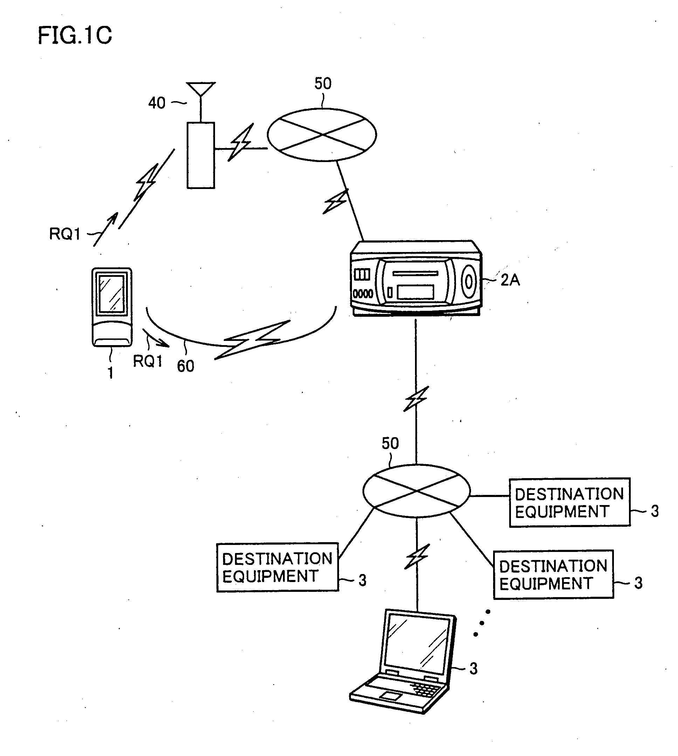

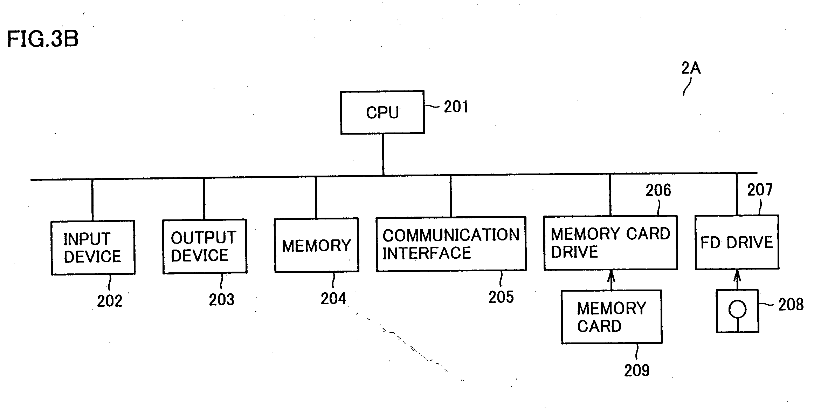

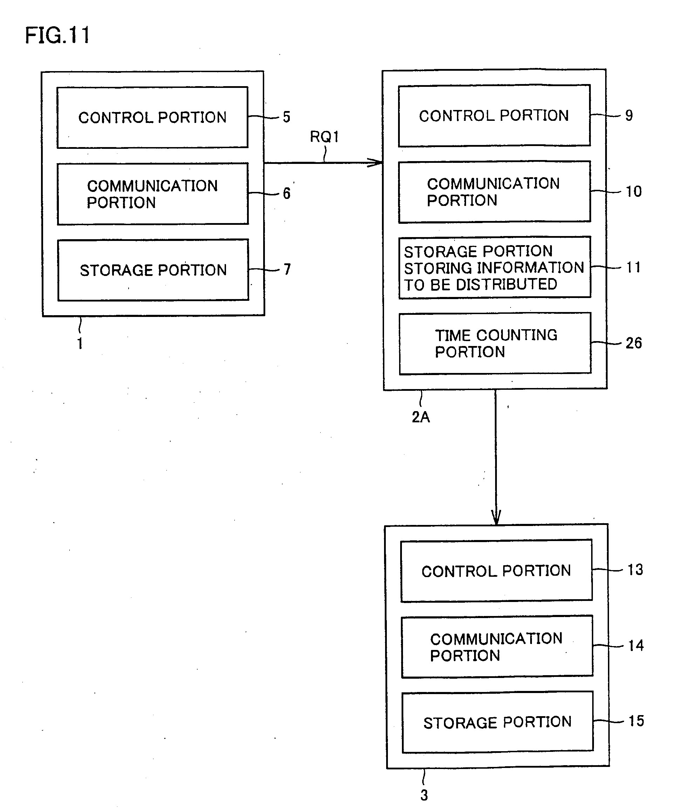

Fig. 1C shows an outline of a configuration of the information distribution system in the present embodiment, and Fig. 3B shows a configuration of an information distribution server 2A in the present embodiment. The Fig. 3B configuration is similar to the Fig. 3A configuration and accordingly will not be described. Fig. 11 shows a functional configuration of the information distribution system in the fifth embodiment. In Fig. 11, the information distribution system includes information terminal 1, information distribution server 2A and destination equipment 3. Information terminal 1 and destination equipment 3 have their functional configurations similar to those shown in Fig. 6. Accordingly they will not be described. Information distribution server 2A includes the aforementioned control portion 9, communication portion 10 and storage portion 11 having stored therein information to be distributed, plus a time counting portion 26 for counting the current time. In the present embodiment, information terminal 1 has a time mode enabling destination equipment 3 to start to receive distributed information when a predetermined point of time is arrived at, and the time mode is set or unset by a user operating input device 102. The predetermined point of time can also variably be set by the user operating input device 102.

In the fifth embodiment, information terminal 1 is assumed for example as a notebook personal computer, a PDA, a mobile phone or other similar mobile information terminal equipment, information distribution server 2A for example as a server computer installed for example in train stations, convenience stores and the like, and destination equipment 3 for example as a personal computer stationary at home.

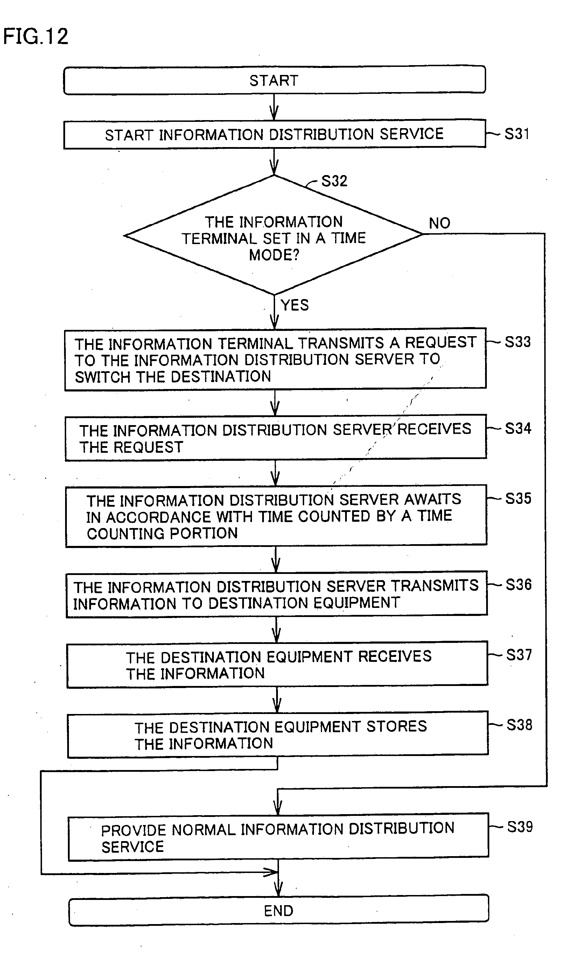

Reference will now be made to the flowchart shown in Fig. 12 to describe the information distribution service in the fifth embodiment. Information distribution server 2A starts the information distribution service (S31). In information terminal 1 control portion 5 in response to a service starting trigger being applied through communication portion 6 determines whether the terminal is set in the time mode (S32). If so (Yes at S32) information terminal 1 transmits a request RQ1 to information distribution server 2A through communication portion 6 to switch the destination (S33). Request RQ1 includes data indicating a specific point of time set with respect to the time mode, and information such as the address of destination equipment 3.

In information distribution server 2A control portion 9 receives request RQ1 through communication portion 10 (S34). It waits for a period of time based on the difference between a predetermined point of time indicated by request RQ1 and the current time counted by time counting portion 26 and then reads from storage portion 11 information to be distributed and transmits the information to destination equipment 3 indicated by an address contained in request RQ1 (S35, S36). In destination equipment 3 control portion 13 receives the information from information distribution server 2 through communication portion 14 (S37) and stores the information via storage portion 15 to a memory location (S38).

When a decision is made that the terminal is not set in the time mode (No at S32) then the normal information distribution service is provided (S39).

In accordance with the present embodiment, setting a time mode allows information to be received by destination equipment 3 when a predetermined point of time is arrived at. As such, simply by setting information terminal 1 in the time mode, the user carrying information terminal 1 with him/her, even on the road, can have control so that when the predetermined point of time is arrived at, information is distributed to destination equipment 3 stationary at home. Accordingly, if the user sets the predetermined point of time to match for example to the time of his/her arrival at home, then when the user arrives at home the user can obtain distributed information from destination equipment 3.

### Sixth Embodiment

A sixth embodiment will be described. In the present embodiment the information distribution system has an outline and a functional configuration similar to those shown in Figs. 1A and 6, respectively. Accordingly they will not be described. In the present embodiment, information terminal 1 has a destination switching mode allowing information destined for the terminal to be destined for destination equipment 3 unconditionally, and information terminal 1 is set or not set in the mode by a user operating input device 102. In the sixth embodiment, information terminal 1 is assumed for example as a notebook personal computer, a PDA, a mobile phone or other similar mobile information terminal equipment, information distribution server 2 for example as a server computer installed for example in train stations, convenience stores and the like, and destination equipment 3 for example as a personal computer stationary for example at home.

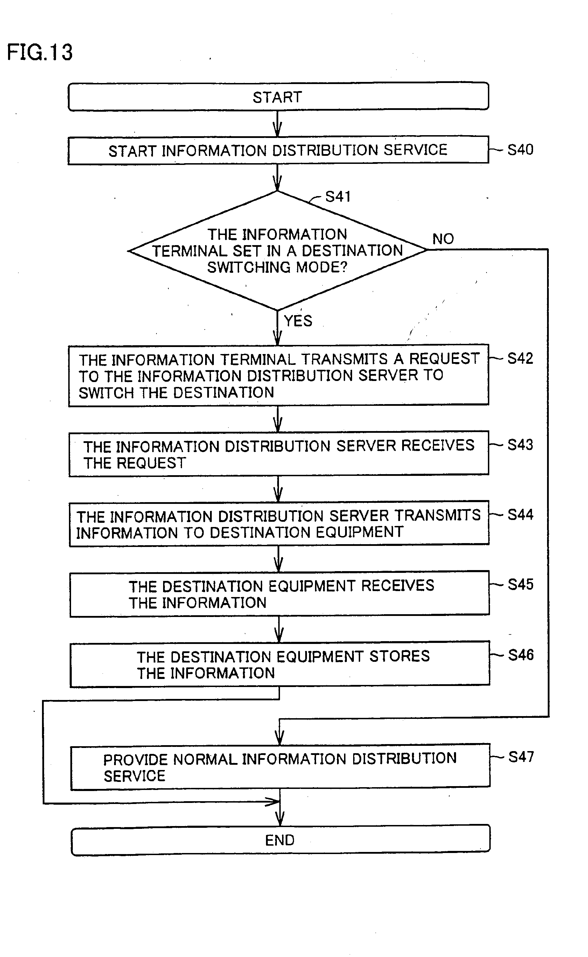

With reference to the flowchart shown in Fig. 13, the information distribution service in the sixth embodiment operates, as described hereinafter. If mention distribution server 2 starts the information distribution service (S40). In information terminal 1 control portion 5 in response to a service starting trigger being applied through communication portion 6 determines whether information terminal 1 is set in the destination switching mode (S41).

If so (Yes at S41) control portion 1 transmits request RQ to information distribution server 2 through communication portion 6 to switch the destination (S42). In information distribution server 2 control portion 9 receives request RQ (S43) and it reads via storage portion 11 information to be distributed and transmits the read information to destination equipment 3 in accordance with request RQ received (S44). In destination equipment 3 control portion 13 receives through communication portion 14 the information distributed from information distribution server 2 (S45) and stores the received information via storage portion 15 to a memory location (S46).

If a decision is made that information terminal 1 is not set in the destination switching mode (No at S41) then the normal information distribution service is provided (S47).

### Seventh Embodiment

A seventh embodiment will be described. In the present embodiment the decision on whether to switch the destination of information is made as based on type information TI distinct from information to be distributed.

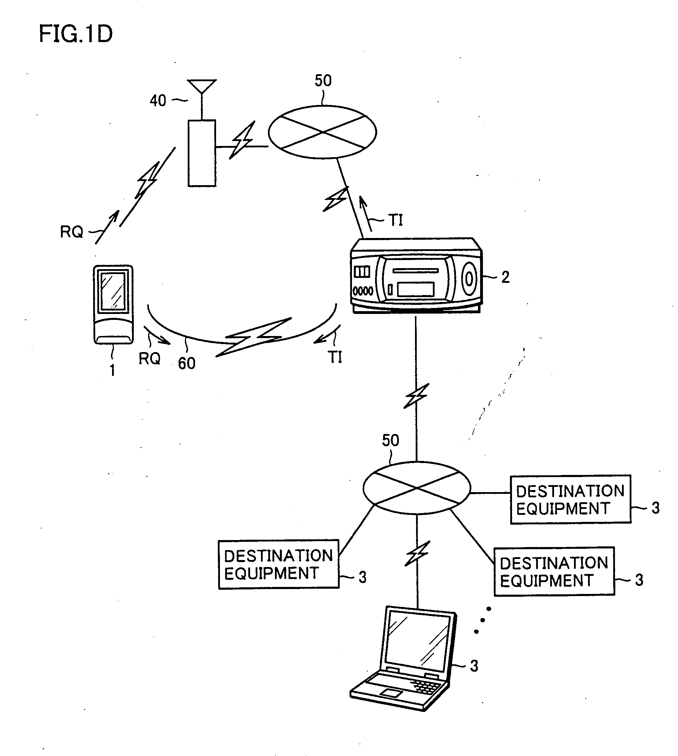

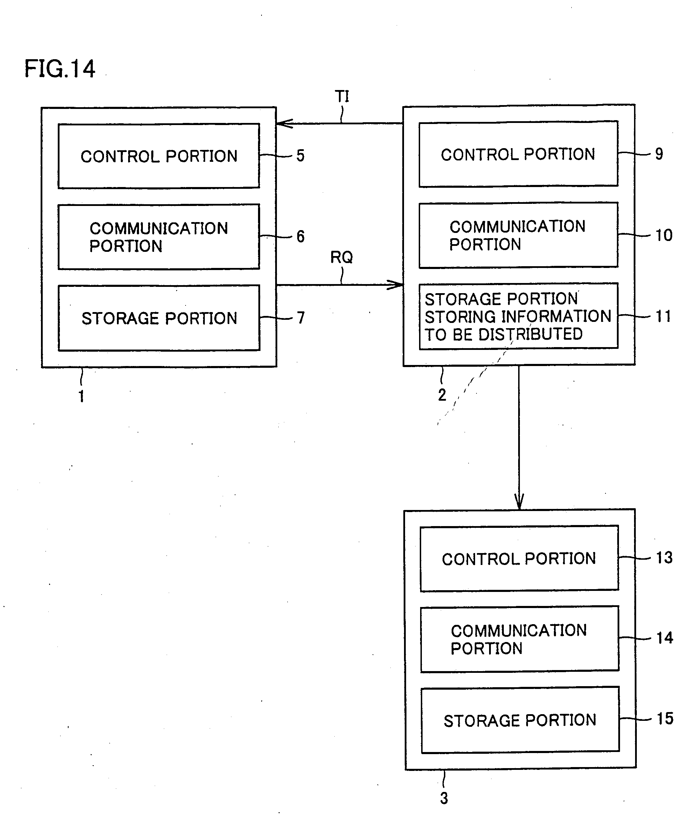

Figs. 1D and 14 show general and configurations, respectively, of the information distribution system in the seventh embodiment. In Fig. 14, the information distribution system includes information terminal 1, information distribution server 2 and destination equipment 3. They each have a functional configuration similar to that shown in Fig. 6. Accordingly they will not be described. In the seventh embodiment, information terminal 1 and information distribution server 2 communicate request RQ to switch a destination, and type information TI. Type information TI is information transmitted separately from information to be distributed and represents data regarding an attribute of the information to be distributed. For example it is assumed as containing data of at least one for example of: the type(s) of the information to be distributed (e.g., image information, audio information, schedule information or the like); the type(s) of the file(s) contained in the information to be distributed (e.g., text data, postscript or the like); the type of encryption if the information to be distributed is encrypted; the type of compression format if the information to be distributed is compressed; the type of the size of the information to be distributed; the time required to complete the distribution; and the like.

In the seventh embodiment, information terminal 1 is assumed for example as a notebook personal computer, a PDA, a mobile phone or other similar mobile information terminal equipment, information distribution server 2 for example as a server computer installed for example in train stations, convenience stores and the like, and destination equipment 3 for example as a personal computer stationary at home and having a sufficient information processing ability (such as decryption, extraction, storage, output and the like).

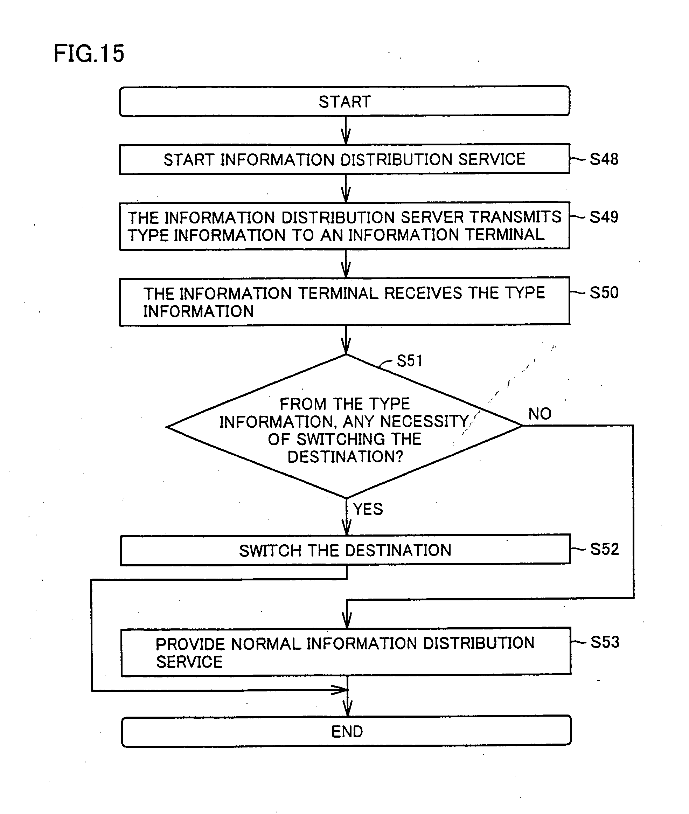

With reference to the flowchart shown in Fig. 15 the information distribution service in the seventh embodiment operates, as described hereinafter. Information distribution server 2 starts the information distribution service (S48). In information distribution server 2 control portion 9 prior to transmission of information to be distributed transmits type information TI to information terminal 1 through communication portion 10 (S49).

In information terminal 1 control portion 5 receives type information TI through communication portion 6 (S50) and determines from type information TI whether the information of interest should be received by destination equipment 3 in place of information terminal 1 (S51). If a decision is made that the information should be received by destination equipment 3 and the current destination should be switched then a destination switching process is effected, similarly as described in the first embodiment at steps S2-S6 (S52). If a decision is made that it is unnecessary to switch the current destination then the normal information distribution service is provided (S53).

The S51 decision is made, as follows: data indicated by type information TI and a function or ability of information terminal 1 are compared to determine whether: information terminal 1 is capable of receiving information; information terminal 1 determined to be capable of receiving information is capable of processing (e.g., decrypting, extracting, storing, outputting) it; and the like. If a decision is made that information terminal 1 is incapable of receiving or processing the information and accordingly receiving the information is not permitted, then a decision is made that the information should be received by destination equipment 3.

### Eighth Embodiment

An eighth embodiment will be described. In the present embodiment when the above-described destination switching is performed a notification is accordingly, externally provided.

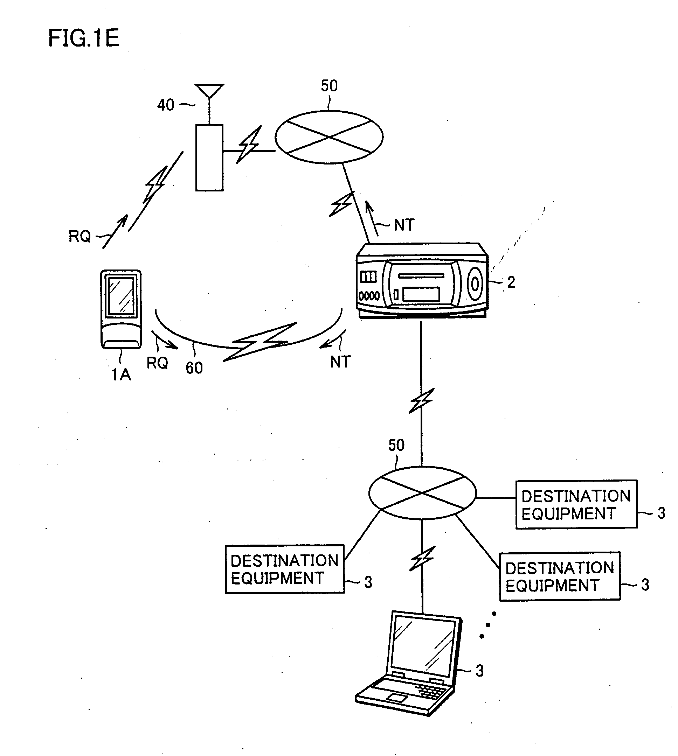

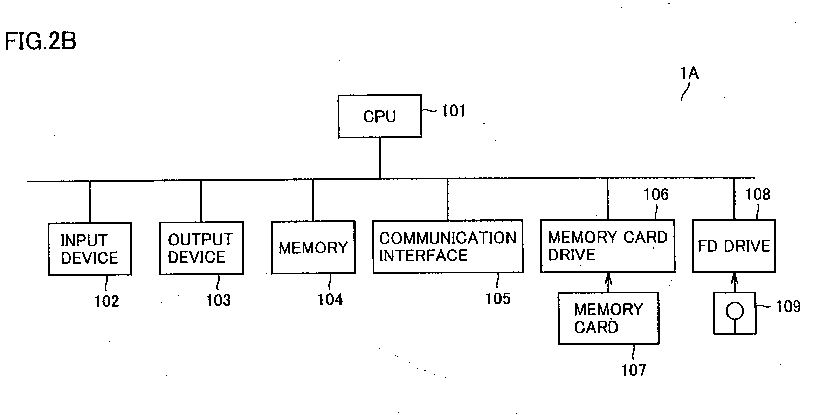

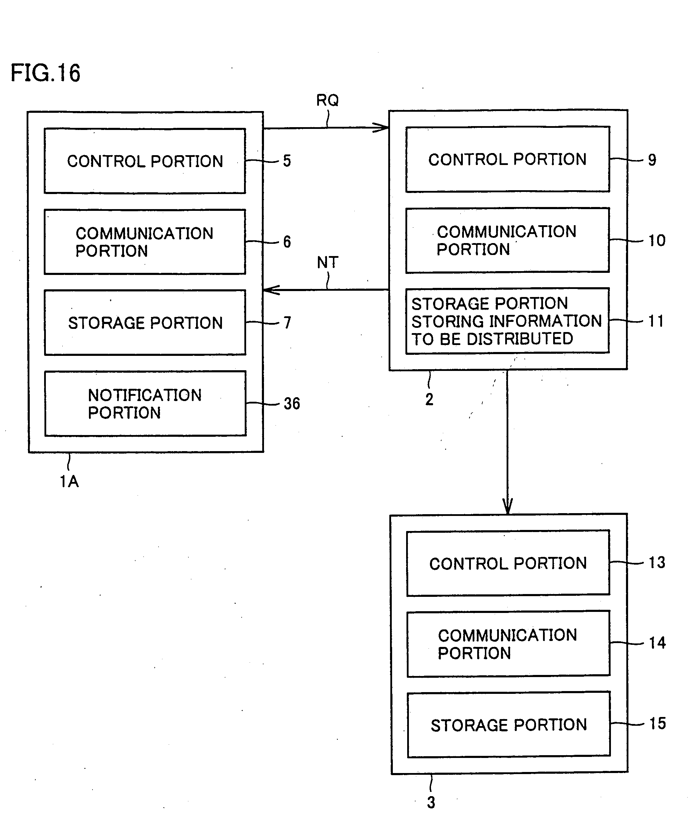

Figs. 1E and 16 show general and functional configurations, respectively, of the information distribution system in the eighth embodiment. As shown in the figures, the information distribution system includes information terminal 1A, information distribution server 2 and destination equipment 3 configured as shown in Fig. 2B. The Fig. 2B configuration is identical to the Fig. 2A configuration and accordingly will not be described. Information distribution server 2 and destination equipment 3 each have a functional configuration similar to that shown in Fig. 6. Accordingly, they will not be described. In Fig. 16, information terminal 1A includes the above described control portion 5, communication portion 6 and storage portion 7, plus a notification portion 36.

In the eighth embodiment information terminal 1A and information distribution server 2 communicate request RQ to switch a destination and notification NT indicating that switching completes. Notification portion 36 has a function notifying a user of information via output device 103 shown in Fig. 2B. In the present embodiment, information terminal 1A is assumed for example as a notebook personal computer, a PDA, a mobile phone or other similar mobile information terminal equipment, information distribution server 2 for example as a server computer installed for example in train stations, convenience stores and the like, and destination equipment 3 for example as a personal computer stationary at home.

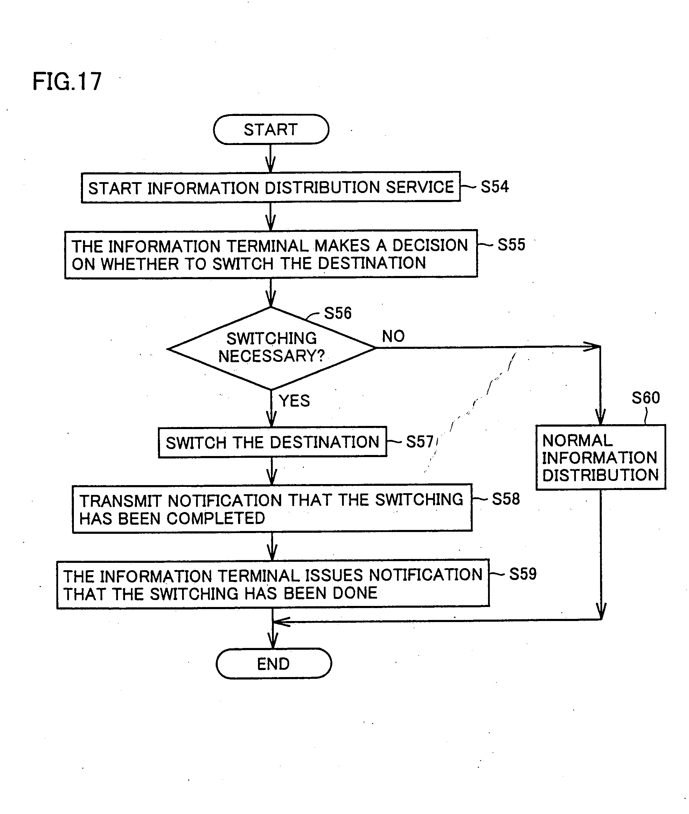

With reference to the flowchart shown in Fig. 17, the information distribution service in the eighth embodiment operates, as described hereinafter. Information distribution server 2 starts the information distribution service (S54). In information terminal 1A control portion 5 determines whether the destination of information should be switched to destination equipment 3, similarly as described in the previous embodiments (S55). If so (Yes at S56) it switches the destination to destination equipment 3 (S57), as has been described in the first embodiment.

When information distribution server 2 completes the distribution of the information to destination equipment 3, it transmits to information terminal 1A notification NT indicating that the destination has completely been switched (S58). Control portion 5 receives notification NT and notifies an external user through notification portion 36 that the destination of the information has been switched from information terminal 1A to destination equipment 3 and that the distribution of the information has been completed (S59). The notification is for example displayed on a panel of output device 103 of information terminal 1A, provided audibly through a speaker, or indicated by a flashing LED (Light Emitting Diode) lump.

If a decision is made that it is not necessary to switch the destination (No at S56) then the normal information distribution for information terminal 1A is effected (S60).

### Ninth Embodiment

A system having the above described processing function is implemented by a program. In the present embodiment this program is stored in a computer readable recording medium.

In the present embodiment this recording medium may be memory required for effecting a processing in information terminals 1 and 1A, information distribution servers 2 and 2A and destination equipment 3 and 3A, such as the exact ROM of memories 104, 204 and 304. Herein, the above recording medium is configured to be separable from the bodies of the terminal, server and equipment and it may be a medium carrying a program in a fixed manner. For example, it may be FDs 109 and 208, hard disc 306 or any other similar magnetic disc, CD-ROM/magnetic optical disc (MO)/mini disc (MD)/digital versatile disc (DVD) or any other similar optical disc, although not shown, memory cards 107, 109/or any other similar optical card, although not shown, or semiconductor memory for example by mask ROM, erasable and programmable ROM (EPROM), electrically EPROM (EEPROM), flash ROM and the like.

Information terminals 1 and 1A, information distribution servers 2 and 2A, and destination equipment 3 and 3A are configured to be connectable to various types of external communication line through communication interfaces 105, 205 and 305. Accordingly, the recording medium may be a medium storing a program downloaded from these communication lines, i.e., a medium carrying a program in a so-called state of flax.

In accordance with the above embodiments when an information terminal has a limited ability preventing the terminal from receiving information distributed from an information distribution server or it wants to avoid reception of the information to enhance utility or the like the information terminal transmits a request to the information distribution server to switch the destination to switch the destination. The information is distributed to destination equipment indicated by the request so that the information can be obtained via the destination equipment in place of the information terminal. As such, if the information terminal has an insufficient storage capacity or it has an insufficient ability to handle information, the information distribution service can still be effectively utilized. Furthermore, the system can also be readily configured for a variety of information terminals having different functions.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An information distribution apparatus (2) comprising:
distribution means (10) for distributing information;
destination switching means (9) switching a destination of said information distributed from said distribution means (10) from a specific one (1) of a plurality of terminal devices (1, 3) to another terminal device (3) when said distribution means (10) having started to distribute said information to said specific terminal device (1) receives a request (RQ) from said specific terminal device (1) to switch the destination of said information; and
means (9) for continuing to distribute said information from said distribution means (10) to said specific terminal device (1) when said distribution means (10) having started to distribute said information does not receive said request (RQ) from said specific terminal device (1).

2. The information distribution apparatus of claim 1, wherein said request (RQ) is transmitted from said specific terminal device (1) to said information distribution apparatus (2) when said specific terminal device (1) determines that said specific terminal device (1) has a self state corresponding to a predetermined state requiring that the destination of said information be switched to said another terminal device.

3. The information distribution apparatus of claim 1, wherein said another terminal device (3) is capable of providing a processing including receiving and storing said information.

4. The information distribution apparatus of claim 1, wherein said specific terminal device (1) determines from attribute data received from said information distribution apparatus (2) and indicative of an attribute of said information whether said self state corresponds to said predetermined state.

5. The information distribution apparatus of claim 4, wherein said attribute data is contained in said information.

6. The information distribution apparatus of claim 4, wherein said attribute data is transmitted from said information distribution apparatus (2) to said specific terminal device (1) when said distribution means (10) starts to distribute said information before said information is transmitted.

7. The information distribution apparatus of claim 1, wherein said predetermined state represents that said specific terminal device (1) has an insufficient storage capacity to store said information distributed.

8. The information distribution apparatus of claim 1, wherein said predetermined state represents that said specific terminal device (1) has an insufficient ability to process said information distributed.

9. The information distribution apparatus of claim 1, wherein said predetermined state represents that a period of time required for said specific terminal device (1) to completely receive said information transmitted from said information distribution apparatus (2) exceeds a predetermined period of time set in said specific terminal device (1).

10. The information distribution apparatus of claim 1, wherein:
said predetermined state represents that a predetermined point of time at which said information should be distributed is set in said specific terminal device (1);
said request (RQ1) contains time data indicating said predetermined point of time; and
said information distribution apparatus (2A) further comprises time counting means (26) counting a current time and when said time counting means (26) counts said predetermined point of time indicated by said time data contained in said request (RQ1) received said information is distributed to said another terminal device (3).

11. The information distribution apparatus of claim 1, wherein said predetermined state represents that said request (RQ) is unconditionally transmitted.

12. The information distribution apparatus of claim 1, wherein:
said information distribution apparatus (2) further comprises notification means transmitting to said specific terminal device (1) a notification (NT) that said information has been transmitted to said another terminal device (3); and
said specific terminal device (1A) receives said notification (NT) from said notification means and in accordance with said notification (NT) received said specific terminal device (1A) externally notifies that said information has been distributed to said another terminal device (3).

13. An information terminal device (1) corresponding to any one of a plurality of information terminal devices (1, 3) communicating with an information distributing source apparatus (2) to receive said information therefrom, said information distributing source apparatus (2) operable in accordance with content received, said information terminal device comprising:
state decision means determining whether said information terminal device (1) has a self state corresponding to a predetermined state when said information distributing source apparatus (2) starts to distribute said information, said predetermined state requiring that a destination of said information be switched to another said information terminal device (3);
means transmitting a request (RQ) to said information distributing source apparatus (2) to switch the destination of said information from said information terminal device (1) to said another information terminal device (3) when said state decision means determines that said self state corresponds to said predetermined state; and
means receiving said information from said information distributing source apparatus (2) when said state decision means determines that said self state fails to correspond to said predetermined state.

14. An information distribution system, comprising an information distribution apparatus (2) distributing information and a plurality of information terminal devices (1, 3) to receive said information distributed, wherein:
when said information distribution apparatus (2) starting to distribute said information to a specific one (1) of said plurality of information terminal devices (1, 3) receives a request (RQ) from said specific information terminal (1) to switch a destination of said information, said specific terminal device (1) is switched to another one (3) of said plurality of information terminal devices (1, 3) and said information distribution apparatus (2) distributes said information to said another information terminal device (3); and
when said information distribution apparatus (2) starts to distribute said information, said specific information terminal device (1) transmits, as required, a request (RQ) to said information distribution apparatus (2) to switch the destination of said information for distribution.

15. The information distribution system of claim 14, wherein when said information distribution apparatus (2) starts to distribute said information and said specific information terminal device (1) determines that said specific information terminal device (1) has a self state requiring that the destination of said information be switched from said specific information terminal device (1) to said another information terminal device (3), said specific information terminal device (1) transmits said request (RQ) to said information distribution apparatus (2).

16. A method of distributing information to a plurality of terminal devices (1, 3) through a network, comprising the steps of:
(S1A) distributing information;
(S3, S4) switching a destination of said information distributed in the step of distributing from a specific one (1) of said terminal devices (1, 3) to another one (3) of said terminal devices (1, 3) when the step of distributing starts to distribute said information to said specific terminal device (1) and a request (RQ) is received from said specific terminal device (1) to switch the destination of said information; and
(S1d) allowing the step of distributing (S1a) to continue to distribute said information to said specific terminal device (1) when the step of distributing (S1a) starts to distribute said information and said request (RQ) is not received from said specific terminal device (1).

17. A machine-readable recording medium (208, 209, 204) having recorded therein a program causing a computer (201) to perform a method of distributing information to a plurality of terminal devices (1, 3) through a network, the method comprising the steps of:
(S1A) distributing information;
(S3, S4) switching a destination of said information distributed in the step of distributing from a specific one (1) of said terminal devices (1, 3) to another one (3) of said terminal devices (1, 3) when the step of distributing starts to distribute said information to said specific terminal device (1) and a request (RQ) is received from said specific terminal device (1) to switch the destination of said information; and
(S1d) allowing the step of distributing (S1a) to continue to distribute said information to said specific terminal device (1) when the step of distributing (S1a) starts to distribute said information and said request (RQ) is not received from said specific terminal device (1).

18. A program product causing a computer (201) to perform a method of distributing information to a plurality of terminal devices (1, 3) through a network, the method comprising the steps of:
(S1A) distributing information;
(S3, S4) switching a destination of said information distributed in the step of distributing from a specific one (1) of said terminal devices (1, 3) to another one (3) of said terminal devices (1, 3) when the step of distributing starts to distribute said information to said specific terminal device (1) and a request (RQ) is received from said specific terminal device (1) to switch the destination of said information; and
(S1d) allowing the step of distributing (S1a) to continue to distribute said information to said specific terminal device (1) when the step of distributing (S1a) starts to distribute said information and said request (RQ) is not received from said specific terminal device (1).

19. A method of processing information, performed in any one (1) of a plurality of information terminal devices (1, 3) receiving information distributed from a source apparatus (2) operable in accordance with content received, comprising the steps of:
(S1b) determining whether said any information terminal device (1) has a self state corresponding to a predetermined state when said source apparatus (2) starts to distribute said information, said predetermined state requiring that a destination of said information be switched to another said information terminal device (3);
(S2) transmitting a request (RQ) to said source apparatus (2) to switch the destination of said information from said any information terminal device (1) to said another information terminal device (3) for distribution when in the step of making a decision (S1b) a decision is made that said self state corresponds to said predetermined state; and
(S1d) receiving said information from said source apparatus (2) when in the step of making a decision (S1b) a decision is made that said self state does not correspond to said predetermined state.
